# EUROPEAN PATENT SPECIFICATION

(11) **EP 4 332 148 B1**
(45) Date of publication and mention of the grant of the patent: **05.11.2025**
(21) Application number: 22827280.3
(22) Date of filing: 19.05.2022
(51) Int. Cl.: C08G 63/85, C08G 63/672, C08G 63/183

(54) **METHOD FOR PREPARING POLYESTER**
VERFAHREN ZUR HERSTELLUNG VON POLYESTER
PROCÉDÉ DE PRÉPARATION DE POLYESTER

(30) Priority: 21.06.2021 CN 202110684213
(43) Date of publication of application: 06.03.2024
(73) Proprietor: Dalian Institute Of Chemical Physics, Chinese Academy Of Sciences, Liaoning 116023 (CN)
(72) Inventor: ZHOU, Guangyuan, Dalian, Liaoning 116023 (CN); LI, Lu, Dalian, Liaoning 116023 (CN); JIANG, Min, Dalian, Liaoning 116023 (CN); WANG, Rui, Dalian, Liaoning 116023 (CN)
(74) Representative: Bayramoglu et al.
(86) International application number: PCT/CN2022/093967
(87) International publication number: WO 2022/267782

(56) References cited:
- WO-A1-2015/137807
- CN-A- 1 958 641
- CN-A- 101 125 915
- CN-A- 101 857 766
- CN-A- 103 665 362
- CN-A- 106 732 493
- CN-A- 113 336 927
- ZHOU GUANNAN ET AL: "Renewable Poly(butene 2, 5-furan dicarboxylate) Nanocomposites Constructed by TiO2 Nanocubes: Synthesis, Crystallization, and Properties", POLYMER DEGRADATION AND STABILITY, BARKING, GB, vol. 189, 16 April 2021 (2021-04-16), XP086597873, ISSN: 0141-3910, [retrieved on 20210416], DOI: 10.1016/J.POLYMDEGRADSTAB.2021.109591

## Description

### TECHNICAL FIELD

The present application relates to a preparation method of a polyester, and belongs to the technical field of polyester materials.

### BACKGROUND

A catalyst is an important factor affecting the color of the polyester. The color of the polyester is mainly derived from the coordination of a metal ion in the catalyst with a group in the polyester during polymerization process to produce a chromophoric group with the metal ion as a color center. For example, when polyesters are synthesized with manganese, cobalt, and germanium as catalysts, it results that the polyesters all have a very dark color. The traditional high-efficiency titanium catalyst easily decomposes and agglomerates when exposed to water, which affects the polymerization process and makes the color of the polyester uneven, which is one of the reasons for the yellowing of the polyester. The activity of the catalyst is also an important factor affecting the color of a polyester. A low-activity catalyst easily causes a decarboxylation reaction of a diacid monomer under harsh reaction conditions to produce small-molecule by-products, resulting in a dark color of a polyester. Lead, antimony, and tin catalysts have a high activity, but are heavy metals, which may cause unpredictable harm to the human body and the entire biological world. Guannan Zhou, Lu Li, Min Jiang, Guoqiang Wang, Rui Wang, Guangfeng Wu, Guangyuan Zhou, Polymer Degradation and Stability, Volume 189, 2021, 109591, teachees renewable poly(butene 2, 5-furan dicarboxylate) nanocomposites constructed by TiO₂ nanocubes.

### SUMMARY

A technical problem to be solved by the present application is to develop a preparation method of a polyester. In the preparation method, nano-TiO₂ (B) is used as a catalyst to synthesize a high-performance polyester, which solves the problem of yellowing of the polyester and improve the mechanical, thermal, and barrier properties of the polyester.

According to an aspect of the present application, a preparation method of a polyester is provided. The preparation method allows the integration of catalytic synthesis and nano-compounding of the polyester.

The preparation method of a polyester includes the following steps:
allowing a raw material including a diacid and a diol to contact a catalyst, and conducting an esterification reaction and a polycondensation reaction to obtain the polyester,
characterized in that the catalyst is nano-TiO₂(B).

Optionally, the diacid is selected from at least one of furandicarboxylic acid (FDCA) and terephthalic acid (TPA).

Optionally, the diol is a C₂₋₄ diol.

Preferably, the diol is selected from at least one of ethylene glycol (EG), 1,3-propanediol, and 1,4-butanediol.

Optionally, the nano-TiO2(B) is selected from one of a zero-dimensional (0D) nanomaterial, a one-dimensional (1D) nanomaterial, a two-dimensional (2D) nanomaterial, and a three-dimensional (3D) nanomaterial;
the 0D nanomaterial is a nanoparticle;
the 1D nanomaterial is a nanowire;
the 2D nanomaterial is a nanosheet; and
the 3D nanomaterial is a nanoporous sphere.

Optionally, a molar ratio of the diol to the diacid is (1.4-3.0):1.

Further optionally, an upper limit of the molar ratio of the diol to the diacid may be independently selected from 2.4, 2.5, 2.6, 2.7, 2.8, 2.9, and 3.0; and a lower limit of the molar ratio of the diol to the diacid may be independently selected from 1.4, 1.5, 1.6, 1.7, 1.8, and 1.9.

Optionally, a molar amount of the catalyst is 0.5‰ to 10‰ of a molar amount of the diacid.

Further optionally, an upper limit of the molar amount of the TiO₂(B) catalyst may be independently selected from 7.5‰, 8‰, 8.5‰, 9‰, 9.5‰, and 10‰; and a lower limit of the molar amount of the TiO₂(B) catalyst may be independently selected from 0.5‰, 2.5‰, 3‰, 3.5‰, 4‰, 4.5%o, and 5‰.

Optionally, the esterification reaction is conducted in an inactive atmosphere.

Optionally, the inactive atmosphere is a nitrogen atmosphere.

Optionally, the esterification reaction is conducted at 190°C to 220°C; and the esterification reaction is conducted for 1 h to 4 h.

Further optionally, the esterification reaction may be conducted at a temperature independently selected from 190°C, 200°C, 210°C, and 220°C.

Optionally, the polycondensation reaction is conducted at 220°C to 250°C.

Further optionally, the polycondensation reaction may be conducted at a temperature independently selected from 220°C, 230°C, 240°C, and 250°C.

Optionally, the polycondensation reaction is conducted for 1 h to 8 h.

Further optionally, the polycondensation reaction may be conducted for a time independently selected from 1 h, 2 h, 3 h, 4 h, 5 h, 6 h, 7 h, and 8 h.

According to another aspect of the present application, a polyester prepared by the above preparation method is provided,
where the polyester has a chromaticity b of less than or equal to 11.2,
an intrinsic viscosity of 0.92 dL/g to 1.36 dL/g,
a tensile strength of 62 MPa to 120 MPa,
an elongation at break of 27% to 266%, and
an oxygen barrier coefficient of 0.5 × 10⁻¹³ to 8.2 × 10⁻¹².

Possible beneficial effects of the present application:
(1) The present application develops a novel method for synergistic catalytic synthesis of a polyester, which can improve an added value of the polyester industry. The nano-TiO₂(B) catalyst can effectively catalyze the synthesis of the polyester and prevent the polyester from yellowing, and the nano-TiO₂(B) is polymerized *in situ* in the polyester, such that a structure of the nano-TiO₂(B) can adjust the structure and properties of a polyester matrix.
(2) A high catalytic activity of the nano-TiO₂(B) can reduce a reactive energy of a substrate molecule, reduce a temperature required for synthesis of the polyester, and avoid the occurrence of side reactions (such as a decarboxylation reaction of the diacid monomer), thereby solving the problem that a polyester synthesized by the traditional polyester catalyst yellows. In addition, in a polymerization process, the nano-TiO₂(B) not only serves as a catalyst, but also is dispersed *in situ* in a polyester matrix, such that the structure of the catalyst can effectively improve the mechanical and barrier properties of the polyester.
(3) Due to rich Lewis acid sites and high activity of a surface of the catalyst TiO₂(B), it can reduce an activation energy of a polymerization reaction to reduce a temperature of the polymerization reaction and avoid the occurrence of side reactions (such as a decarboxylation reaction of the diacid monomer), so as to improve a color of the polyester. In addition, in a polymerization process, the nano-TiO₂(B) not only serves as a catalyst, but also is dispersed *in situ* in a polyester matrix, such that an appropriate interface structure is formed between the nano-TiO₂(B) and a polyester molecular chain to allow improvement of properties of the polyester.

### BRIEF DESCRIPTION OF THE DRAWINGS

FIG. 1 is an electron microscopy (EM) image of a 0D TiO₂(B) nanoparticle in Examples 1 and 10;
FIG. 2 is an EM image of a 1D TiO₂(B) nanowire in Example 2;
FIG. 3 is an EM image of a 2D TiO₂(B) nanosheet in Examples 3, 5 to 9, and 11 to 14;
FIG. 4 is an EM image of a 3D TiO₂(B) nanoporous sphere in Example 4;
FIG. 5 is a cross-sectional EM image of a PEF/TiO₂(B) nanocomposite polyester in Example 1;
FIG. 6 is a cross-sectional EM image of a PTF/TiO₂(B) nanocomposite polyester in Example 14;
FIG. 7 is a cross-sectional EM image of a PBF/TiO₂(B) nanocomposite polyester in Example 13;
FIG. 8 is a cross-sectional EM image of a PET/TiO₂(B) nanocomposite polyester in Example 5;
FIG. 9 is a cross-sectional EM image of a PTT/TiO₂(B) nanocomposite polyester in Example 12; and
FIG. 10 is a cross-sectional EM image of a PBT/TiO₂(B) nanocomposite polyester in Example 11.

### DETAILED DESCRIPTION OF THE EMBODIMENTS

The present application will be described in detail below with reference to examples, but the present application is not limited to these examples.

To illustrate the present application clearly, the present application will be further described below with reference to preferred examples. Those skilled in the art should understand that the content described below is illustrative rather than restrictive, and should not be used to limit the protection scope of the present application.

Unless otherwise specified, the raw materials and catalysts in the examples of the present application all are purchased from commercial sources.

Wherein, FDCA is prepared in accordance with the method of Example 1 in the patent CN201810442696.1, TPA is purchased from Innochem, and other raw materials are purchased from Sinopharm.

The nano-TiO₂(B) catalysts used in the examples of the present application are prepared according to the following preparation methods, respectively:
(1) A preparation method of a TiO₂(B) nanoparticle: through liquid-phase chemical precipitation method, 5 mL of TiCl₄ is added as a titanium source to 200 mL of a mixed solvent of water and EG (wherein a volume ratio of EG to water is 10:1), and a resulting mixture is heated to allow a reaction under reflux for 0.2 h, such that TiCl₄ is hydrolyzed; and a resulting reaction system is centrifuged, and a resulting precipitate is washed with absolute ethanol to obtain the TiO₂(B) nanoparticle.
(2) A preparation method of a TiO₂(B) nanowire: through chemical precipitation and hydrothermal synthesis method, 2 mL of butyl titanate is hydrolyzed in 20 mL of a mixed solvent of water and ethanol (where a volume ratio of water to ethanol is 1:1) to obtain 20 nm particles, then the particles are subjected to a hydrothermal reaction at 160°C for 4 h in 20 mL of a 10 mol/L KOH solution, and then K⁺ is replaced with 0.1 M dilute nitric acid to obtain a titanic acid nanowire; and then the titanic acid nanowire is calcined in a 350°C muffle furnace for 2 h to obtain the 1D TiO₂(B) nanowire.
(3) A preparation method of a TiO₂(B) nanosheet: through liquid-phase chemical precipitation method, 5 mL of TiCl₄ is added as a titanium source to 200 mL of a mixed solvent of EG and water (where a volume ratio of EG to water is 10:1), EG is added as a structure-directing agent, and a resulting mixture is heated to allow reaction under reflux for 2 h, such that TiCl₄ is hydrolyzed, where the structure-directing agent EG may be combined with a c axis of a TiO₂ unit cell to inhibit the growth of the unit cell along the c axis, such that the unit cell grows along a and b axes to be the 2D TiO₂(B) nanosheet.
(4) A preparation method of a TiO₂(B) nanoporous sphere: through liquid-phase chemical precipitation, hydrothermal synthesis, and high-temperature calcination method, 5 mL of butyl titanate is subjected to the alcoholysis in 100 mL of ethanol with 1.5 mL of long-chain oleamine as a structure-directing agent to obtain a titanium alkoxide nanosphere assembled from nanoparticles; the titanium alkoxide nanosphere is subjected to a hydrothermal reaction at 180°C for 6 h in 20 mL of a 10 mol/L NaOH solution to obtain sodium titanate; then replacement is conducted with 0.1 M dilute HCl (Na⁺ is replaced by H⁺) to obtain metatitanic acid; and the metatitanic acid is calcined at 350°C for 4 h to obtain the TiO₂(B) nanoporous sphere assembled from nanowires.

In the examples of the present application, a chromaticity is measured by a 3nh colorimeter (NR200) and an intrinsic viscosity is measured by a Zhongwang UbbeloHde viscometer (IVS100); and the viscosity and chromaticity are measured according to the test methods in the standard GB/T 14190-2017. A tensile strength and an elongation at break are measured by an Instron Electronic Universal Material Testing Machine (Instron-1121). A tensile test is conducted at 25°C by an Instron-1121 testing machine according to requirements in ASTM D638, with a tensile speed of 5 mm/min. A dumbbell-shaped sample with a width of 3.18 mm and a thickness of 3.2 mm is prepared through injection molding by an injection molding machine and tested for the tensile strength and elongation at break. An oxygen transmission coefficient is tested by a Labthink's oxygen transmission rate test system (VAC-V2) according to a test method of the standard GB/T 1038-2000.

### Example 1

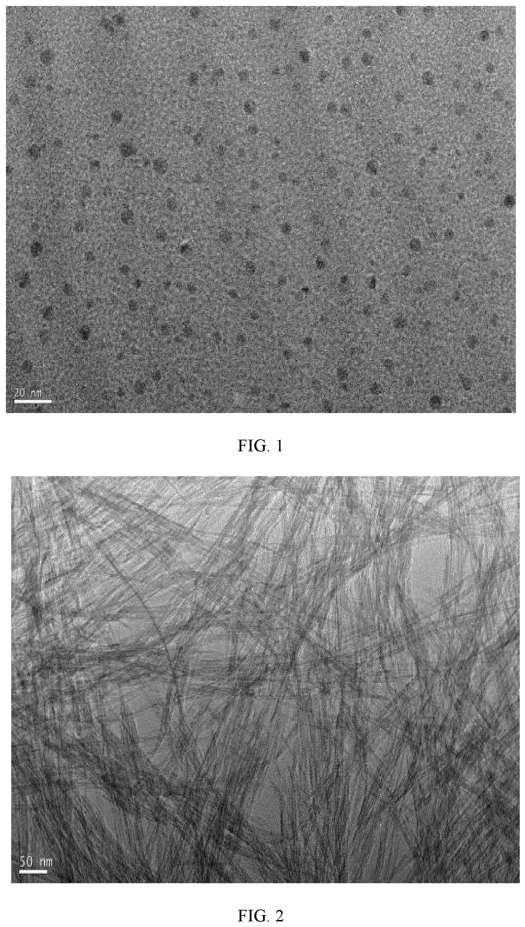

With a TiO₂(B) nanoparticle as a catalyst, 0.1 mol of FDCA and 0.16 mol of EG (a molar ratio of EG to FDCA was 1.6) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanoparticle (an EM image of the TiO₂(B) nanoparticle was shown in FIG. 1) was 5‰ of a molar amount of the FDCA. A resulting product polyethylene 2,5-furandicarboxylate (PEF) was tested for chromaticity and viscosity, and the resulting product was crushed and injection-molded, and then subjected to mechanical and barrier performance tests. Results were shown in Table 1.

### Example 2

With a TiO₂(B) nanowire as a catalyst, 0.1 mol of FDCA and 0.16 mol of EG (a molar ratio of EG to FDCA was 1.6) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanowire (an EM image of the TiO₂(B) nanowire was shown in FIG. 2) was 5‰ of a molar amount of the FDCA. A resulting product PEF was tested for chromaticity and viscosity, and the resulting product was crushed and injection-molded, and then subjected to mechanical and barrier performance tests. Results were shown in Table 1.

### Example 3

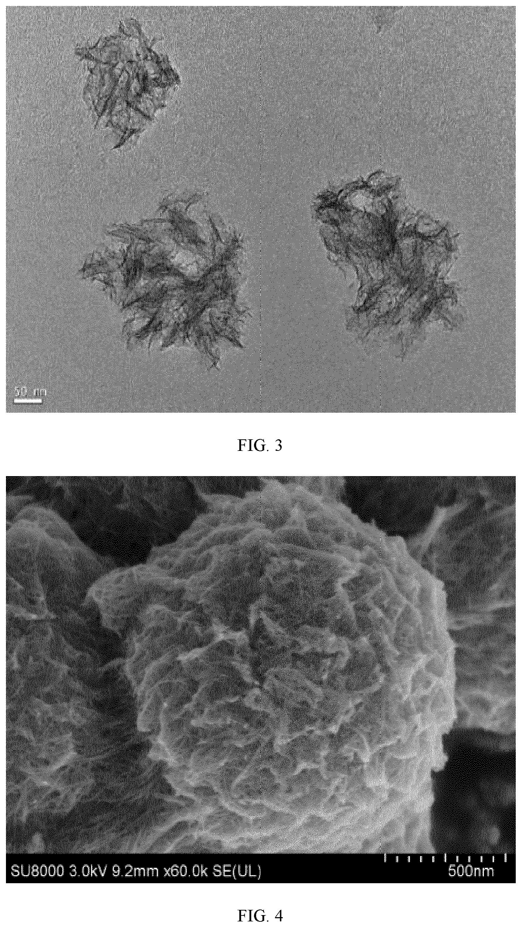

With a TiO₂(B) nanosheet as a catalyst, 0.1 mol of FDCA and 0.16 mol of EG (a molar ratio of EG to FDCA was 1.6) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanosheet (an EM image of the TiO₂(B) nanosheet was shown in FIG. 3) was 5‰ of a molar amount of the FDCA. A resulting product PEF was tested for chromaticity and viscosity, and the resulting product was crushed and injection-molded, and then subjected to mechanical and barrier performance tests. Results were shown in Table 1.

### Example 4

With a TiO₂(B) nanoporous sphere as a catalyst, 0.1 mol of FDCA and 0.16 mol of EG (a molar ratio of EG to FDCA was 1.6) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanoporous sphere (an EM image of the TiO₂(B) nanoporous sphere was shown in FIG. 4) was 5‰ of a molar amount of the FDCA. A resulting product PEF was tested for chromaticity and viscosity, and the resulting product was crushed and injection-molded, and then subjected to mechanical and barrier performance tests. Results were shown in Table 1.

### Example 5

With a TiO₂(B) nanosheet as a catalyst, 0.1 mol of TPA and 0.25 mol of EG (a molar ratio of EG to TPA was 2.5) were adopted as raw materials and subjected to an esterification reaction at each of 190°C, 200°C, 210°C, and 220°C for 1 h and then to a polycondensation reaction at 250°C for 2 h under protection of nitrogen, and then the reaction was terminated, where a molar amount of the TiO₂(B) nanosheet (an EM image of the TiO₂(B) nanosheet was shown in FIG. 3) was 5‰ of a molar amount of the TPA. A resulting product polyethylene terephthalate (PET) was tested for chromaticity and viscosity, and the resulting product was crushed and injection-molded, and then subjected to mechanical and barrier performance tests. Results were shown in Table 1.

### Example 6

With a TiO₂(B) nanosheet as a catalyst, 0.1 mol of FDCA and 0.16 mol of EG (a molar ratio of EG to FDCA was 1.6) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanosheet (an EM image of the TiO₂(B) nanosheet was shown in FIG. 3) was 2.5‰ of a molar amount of the FDCA. A resulting product PEF was tested for chromaticity and viscosity, and the resulting product was crushed and injection-molded, and then subjected to mechanical and barrier performance tests. Results were shown in Table 1.

### Example 7

With a TiO₂(B) nanosheet as a catalyst, 0.1 mol of FDCA and 0.16 mol of EG (a molar ratio of EG to FDCA was 1.6) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanosheet (an EM image of the TiO₂(B) nanosheet was shown in FIG. 3) was 1% of a molar amount of the FDCA. A resulting product PEF was tested for chromaticity and viscosity, and the resulting product was crushed and injection-molded, and then subjected to mechanical and barrier performance tests. Results were shown in Table 1.

### Example 8

With a TiO₂(B) nanosheet as a catalyst, 0.1 mol of TPA and 0.3 mol of EG (a molar ratio of EG to TPA was 3) were adopted as raw materials and subjected to an esterification reaction at each of 190°C, 200°C, 210°C, and 220°C for 1 h and then to a polycondensation reaction at 250°C for 2 h under protection of nitrogen, and then the reaction was terminated, where a molar amount of the TiO₂(B) nanosheet (an EM image of the TiO₂(B) nanosheet was shown in FIG. 3) was 1% of a molar amount of the TPA. A resulting product PET was tested for chromaticity and viscosity, and the resulting product was crushed and injection-molded, and then subjected to mechanical and barrier performance tests. Results were shown in Table 1.

### Example 9

With a TiO₂(B) nanosheet as a catalyst, 0.1 mol of TPA and 0.25 mol of EG (a molar ratio of EG to TPA was 2.5) were adopted as raw materials and subjected to an esterification reaction at each of 190°C, 200°C, 210°C, and 220°C for 4 h and then to a polycondensation reaction at 240°C for 2 h under protection of nitrogen, and then the reaction was terminated, where a molar amount of the TiO₂(B) nanosheet (an EM image of the TiO₂(B) nanosheet was shown in FIG. 3) was 5‰ of a molar amount of the TPA. A resulting product PET was tested for chromaticity and viscosity, and the resulting product was crushed and injection-molded, and then subjected to mechanical and barrier performance tests. Results were shown in Table 1.

### Example 10

With a TiO₂(B) nanoparticle as a catalyst, 0.1 mol of TPA and 0.3 mol of EG (a molar ratio of EG to TPA was 3) were adopted as raw materials and subjected to an esterification reaction at each of 190°C, 200°C, 210°C, and 220°C for 1 h and then to a polycondensation reaction at 250°C for 2 h under protection of nitrogen, and then the reaction was terminated, where a molar amount of the TiO₂(B) nanoparticle (an EM image of the TiO₂(B) nanoparticle was shown in FIG. 1) was 5‰ of a molar amount of the TPA. A resulting product PET was tested for chromaticity and viscosity, and the resulting product was crushed and injection-molded, and then subjected to mechanical and barrier performance tests. Results were shown in Table 1.

### Example 11

With a TiO₂(B) nanosheet as a catalyst, 0.1 mol of TPA and 0.24 mol of 1,4-butanediol (a molar ratio of 1,4-butanediol to TPA was 2.4) were adopted as raw materials and subjected to an esterification reaction at each of 190°C, 200°C, 210°C, and 220°C for 4 h and then to a polycondensation reaction at 240°C for 2 h under protection of nitrogen, and then the reaction was terminated, where a molar amount of the TiO₂(B) nanosheet (an EM image of the TiO₂(B) nanosheet was shown in FIG. 3) was 5‰ of a molar amount of the TPA. A resulting product polybutylene terephthalate (PBT) was tested for chromaticity and viscosity, and the resulting product was crushed and injection-molded, and then subjected to mechanical and barrier performance tests. Results were shown in Table 1.

### Example 12

With a TiO₂(B) nanosheet as a catalyst, 0.1 mol of TPA and 0.14 mol of 1,3-propanediol (a molar ratio of 1,3-propanediol to TPA was 1.4) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanosheet (an EM image of the TiO₂(B) nanosheet was shown in FIG. 3) was 0.5‰ of a molar amount of the TPA. A resulting product polytrimethylene terephthalate (PTT) was tested for chromaticity and viscosity, and the resulting product was crushed and injection-molded, and then subjected to mechanical and barrier performance tests. Results were shown in Table 1.

### Example 13

With a TiO₂(B) nanosheet as a catalyst, 0.1 mol of FDCA and 0.25 mol of 1,4-butanediol (a molar ratio of 1,4-butanediol to FDCA was 2.5) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanosheet (an EM image of the TiO₂(B) nanosheet was shown in FIG. 3) was 5‰ of a molar amount of the FDCA. A resulting product polybutylene 2,5-furandicarboxylate (PBF) was tested for chromaticity and viscosity, and the resulting product was crushed and injection-molded, and then subjected to mechanical and barrier performance tests. Results were shown in Table 1.

### Example 14

With a TiO₂(B) nanosheet as a catalyst, 0.1 mol of FDCA and 0.16 mol of 1,3-propanediol (a molar ratio of 1,3-propanediol to FDCA was 1.6) were adopted as raw materials and subjected to an esterification reaction at each of 190°C, 200°C, 210°C, and 220°C for 1 h and then to a polycondensation reaction at 240°C for 2 h under protection of nitrogen, and then the reaction was terminated, where a molar amount of the TiO₂(B) nanosheet (an EM image of the TiO₂(B) nanosheet was shown in FIG. 3) was 5‰ of a molar amount of the FDCA. A resulting product polypropylene 2,5-furandicarboxylate (PTF) was tested for chromaticity and viscosity, and the resulting product was crushed and injection-molded, and then subjected to mechanical and barrier performance tests. Results were shown in Table 1.

### Comparative Example 1

With tetrabutyl titanate (TBT) as a catalyst, 0.1 mol of FDCA and 0.16 mol of EG (a molar ratio of EG to FDCA was 1.6) were adopted as raw materials and subjected to an esterification reaction at each of 190°C, 200°C, 210°C, and 220°C for 1 h and then to a polycondensation reaction at 250°C for 2 h under protection of nitrogen, and then the reaction was terminated, where a molar amount of the TBT was 5‰ of a molar amount of the FDCA. A resulting product PEF was tested for chromaticity and viscosity, and the resulting product was crushed and injection-molded, and then subjected to mechanical and barrier performance tests. Results were shown in Table 1.

### Comparative Example 2

With TBT as a catalyst, 0.1 mol of TPA and 0.25 mol of EG (a molar ratio of EG to TPA was 2.5) were adopted as raw materials and subjected to an esterification reaction at each of 190°C, 200°C, 210°C, and 220°C for 1 h and then to a polycondensation reaction at 250°C for 2 h under protection of nitrogen, and then the reaction was terminated, where a molar amount of the TBT was 5‰ of a molar amount of the TPA. A resulting product PET was tested for chromaticity and viscosity, and the resulting product was crushed and injection-molded, and then subjected to mechanical and barrier performance tests. Results were shown in Table 1.

**Table 1**

| | Product | Chromaticity | Intrinsic viscosity dL/g | Tensile strength MPa | Elongation at break % | Oxygen transmission coefficient cm³·cm/cm²·s·cm Hg |
|---|---|---|---|---|---|---|
| Example 1 | PEF | b:11.2 | 1.25 | 107 | 42 | 1.9×10⁻¹³ |
| Example 2 | PEF | b:6.5 | 1.19 | 109 | 31 | 2.8×10⁻¹³ |
| Example 3 | PEF | b:7.7 | 1.36 | 116 | 45 | 0.5×10⁻¹³ |
| Example 4 | PEF | b:9.1 | 1.22 | 120 | 27 | 8.1×10⁻¹³ |
| Example 5 | PET | b:0.5 | 1.25 | 71 | 166 | 3.5×10⁻¹² |
| Example 6 | PEF | b:9.6 | 1.28 | 111 | 36 | 52×10⁻¹³ |
| Example 7 | PEF | b:5.1 | 1.32 | 118 | 51 | 4.6×10⁻¹³ |
| Example 8 | PET | b: 1.2 | 1.17 | 78 | 157 | 3.3×10⁻¹² |
| Example 9 | PET | b:1.6 | 1.05 | 65 | 134 | 8.1×10⁻¹² |
| Example 10 | PET | b:3.6 | 0.92 | 64 | 139 | 6.6×10⁻¹² |
| Example 11 | PBT | b:0.1 | 0.96 | 85 | 141 | 8.2×10⁻¹² |
| Example 12 | PTT | b:0.1 | 1.13 | 62 | 185 | 6.4×10⁻¹² |
| Example 13 | PBF | b:5.2 | 1.22 | 62 | 266 | 9.1×10⁻¹³ |
| Example 14 | PTF | b:6.7 | 1.19 | 76 | 39 | 1.4×10⁻¹² |
| Comparative Example 1 | PEF | b:26.8 | 0.86 | 84 | 9 | 3.9×10⁻¹² |
| Comparative Example 2 | PET | b:8.5 | 0.66 | 56 | 34 | 94×10⁻¹² |

Generally, in a nano-compounding process, the introduction of a small amount of a nanomaterial can affect a structure of a polymer, thereby affecting mechanical properties of the polymer. Common toughening mechanisms of polymer nanocomposites are as follows: debonding and pull-out, crack deflection, crack pinning, and crack bridging. In a polymerization process of a polyester, appropriate weak interfacial bonding is formed between the catalyst nano-TiO₂(B) and a polymer matrix instead of strong interfacial bonding, and under an action of an external force load, the nanomaterial is prone to "cavitation" phenomena such as debonding, crack propagation direction deflection, and nanomaterial pull-out in the polymer matrix, where an interface will play a role of blocking the crack propagation and consume an additional energy, which can increase a total fracture energy, make the material to be toughened, and bring improvement of other properties. It can be seen from Examples 1 to 4, Examples 6 to 7, and Comparative Example 1 that, a product PEF obtained with the nano-TiO₂(B) as a catalyst has a better tensile strength and elongation at break than those of a product PEF obtained with TBT as a catalyst, that is, when the nano-TiO₂(B) is used as a catalyst, the obtained product PEF has improved toughness.

It can be seen from Examples 1 to 4, Examples 6 to 7, and Comparative Example 1 that, at a same polyester synthesis temperature, the polyester obtained in Comparative Example 1 has a lower viscosity than that of the polyester obtained with TiO₂(B) as a catalyst; the polyester obtained in Comparative Example 1 has a higher chromaticity value b than that of the polyester prepared in the example of the present application; and the polyester obtained in Comparative Example 1 has a higher oxygen transmission coefficient than that of the polyester prepared in the example of the present application. That is, at a same synthesis temperature, the preparation of a polyester with TiO₂(B) as a catalyst in the present application can obtain a polyester with an improved viscosity, a reduced value b, and improved barrier properties.

It can be seen from Example 5, Examples 8 to 10, and Comparative Example 2 that, at a same polyester synthesis temperature, the polyester obtained in Comparative Example 2 has a lower viscosity than that of the polyester obtained with TiO₂(B) as a catalyst; the polyester obtained in Comparative Example 2 has a higher chromaticity value b than that of the polyester prepared in the example of the present application; and the polyester obtained in Comparative Example 2 has a higher oxygen transmission coefficient than that of the polyester prepared in the example of the present application. That is, at a same synthesis temperature, the preparation of a polyester with TiO₂(B) as a catalyst in the present application can obtain a polyester with an improved viscosity, a reduced value b, and improved barrier properties.

It can be seen from Example 5, Examples 8 to 10, and Comparative Example 2 that, a product PET obtained with the nano-TiO₂(B) as a catalyst has a better tensile strength and elongation at break than those of a product PET obtained with TBT as a catalyst, that is, when the nano-TiO₂(B) is used as a catalyst, the obtained product PET has improved toughness.

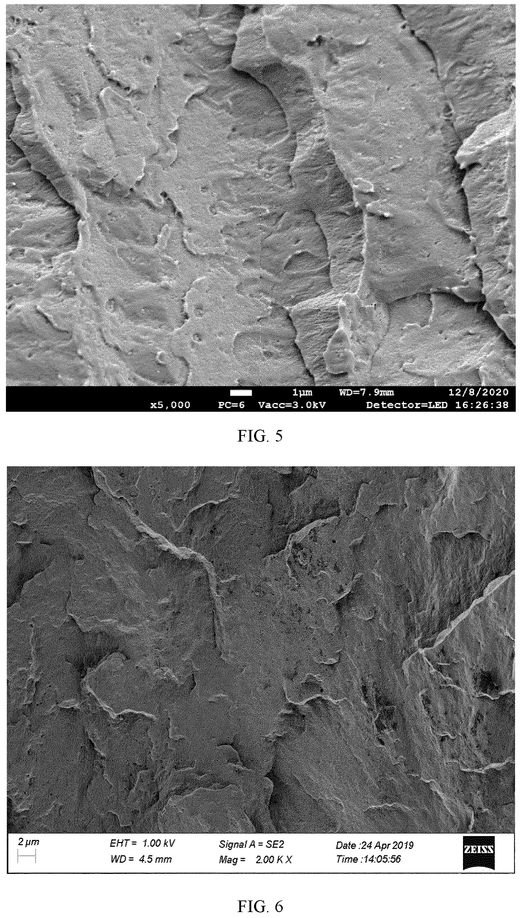

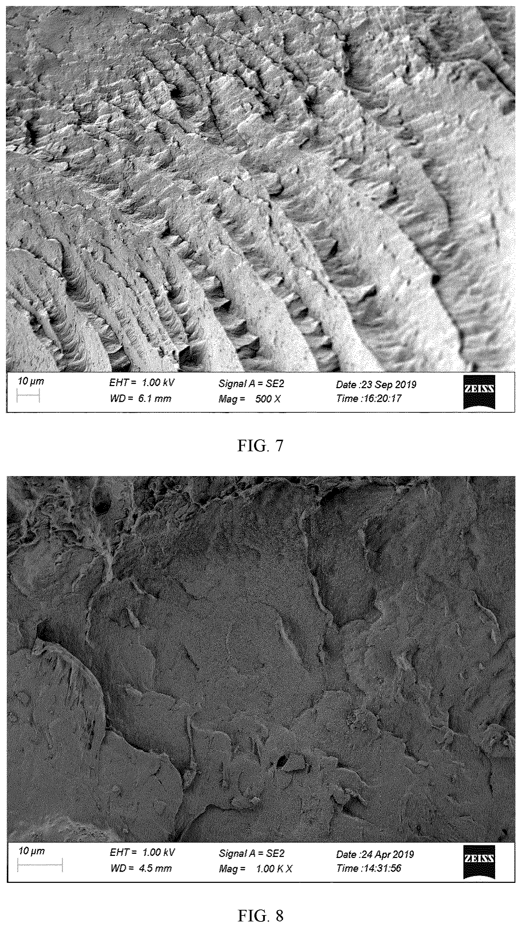

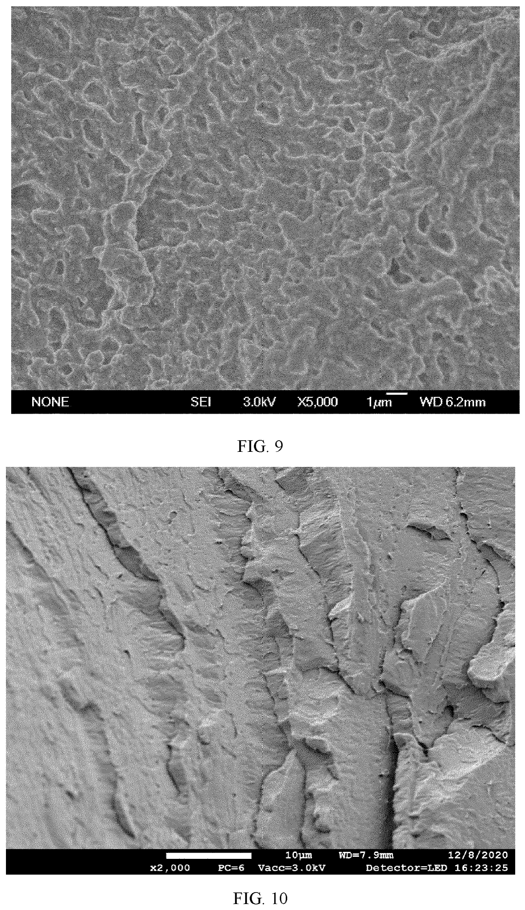

FIG. 5 to FIG. 10 show cross-sectional EM images of the prepared composite polyester. It can be seen from FIG. 5 to FIG. 10 that, there is no obvious agglomeration phenomenon in a matrix of the composite polyester, indicating that the catalyst is dispersed *in situ* in the polyester matrix and the dispersibility is very well.

The above examples are merely few examples of the present application, and do not limit the present application in any form. Although the present application is disclosed as above with preferred examples, the present application is not limited thereto.

## Claims

1. A preparation method of a polyester, **characterized by** comprising the following steps:
allowing a raw material comprising a diacid and a diol to contact a catalyst, and conducting an esterification reaction and a polycondensation reaction sequentially to obtain the polyester,
**characterized in that** the catalyst is nano-TiO₂(B).

2. The preparation method according to claim 1, **characterized in that** the diacid is selected from at least one of furandicarboxylic acid (FDCA) and terephthalic acid (TPA).

3. The preparation method according to claim 1, **characterized in that** the diol is a C₂₋₄ diol.

4. The preparation method according to claim 1, **characterized in that** the diol is selected from at least one of ethylene glycol (EG), 1,3-propanediol, and 1,4-butanediol.

5. The preparation method according to claim 1, **characterized in that** the nano-TiO₂(B) is selected from one of a zero-dimensional (0D) nanomaterial, a one-dimensional (1D) nanomaterial, a two-dimensional (2D) nanomaterial, and a three-dimensional (3D) nanomaterial;
the 0D nanomaterial is a nanoparticle;
the 1D nanomaterial is a nanowire;
the 2D nanomaterial is a nanosheet; and
the 3D nanomaterial is a nanoporous sphere.

6. The preparation method according to claim 1, **characterized in that** a molar ratio of the diol to the diacid is (1.4-3.0): 1; and
a molar amount of the catalyst is 0.5‰ to 10‰ of a molar amount of the diacid.

7. The preparation method according to claim 1, **characterized in that** the esterification reaction is conducted in an inactive atmosphere.

8. The preparation method according to claim 7, **characterized in that** the inactive atmosphere is a nitrogen atmosphere.

9. The preparation method according to claim 1, **characterized in that** the esterification reaction is conducted at 190°C to 220°C; and the esterification reaction is conducted for 1 h to 4 h.

10. The preparation method according to claim 1, **characterized in that** the polycondensation reaction is conducted at 220°C to 250°C; and
the polycondensation reaction is conducted for 1 h to 8 h.

11. A polyester prepared by the preparation method according to claims 1 to 10.

12. The polyester according to claim 11, **characterized in that** the polyester has a chromaticity b of less than or equal to 11.2, an intrinsic viscosity of 0.92 dL/g to 1.36 dL/g, a tensile strength of 62 MPa to 120 MPa, an oxygen barrier coefficient of 0.5 × 10⁻¹³ to 8.2 × 10⁻¹², and an elongation at break of 27% to 266%, wherein the parameters are measured in accordance with the relevant method in the description.

## Patentansprüche

1. Herstellungsverfahren für ein Polyester, **dadurch gekennzeichnet, dass** es die folgenden Schritte umfasst:
In-Kontakt-Bringen eines Rohmaterials, umfassend eine Dicarbonsäure und ein Diol, mit einem Katalysator und Durchführen einer Veresterungsreaktion und einer Polykondensationsreaktion nacheinander, um das Polyester zu erhalten,
**dadurch gekennzeichnet, dass** der Katalysator Nano-TiO₂(B) ist.

2. Herstellungsverfahren nach Anspruch 1, **dadurch gekennzeichnet, dass** die Dicarbonsäure ausgewählt ist aus mindestens einem von Furan-2,5-dicarbonsäure (FDCA) und Terephthalsäure (TPA).

3. Herstellungsverfahren nach Anspruch 1, **dadurch gekennzeichnet, dass** das Diol ein C2-4-Diol ist.

4. Herstellungsverfahren nach Anspruch 1, **dadurch gekennzeichnet, dass** das Diol ausgewählt ist aus mindestens einem von Ethylenglykol (EG), 1,3-Propandiol und 1,4-Butandiol.

5. Herstellungsverfahren nach Anspruch 1, **dadurch gekennzeichnet, dass** das Nano-TiO₂(B) ausgewählt ist aus einem von einem nulldimensionalen (0D) Nanomaterial, einem eindimensionalen (1D) Nanomaterial, einem zweidimensionalen (2D) Nanomaterial und einem dreidimensionalen (3D) Nanomaterial;
wobei das 0D-Nanomaterial ein Nanopartikel ist;
das 1D-Nanomaterial ein Nanodraht ist;
das 2D-Nanomaterial ein Nanoblatt ist; und
das 3D-Nanomaterial eine nanoporöse Kugel ist.

6. Herstellungsverfahren nach Anspruch 1, **dadurch gekennzeichnet, dass** ein Molverhältnis des Diols zur Dicarbonsäure (1,4-3,0):1 beträgt; und
eine Stoffmenge des Katalysators 0,5 ‰ bis 10 ‰ einer Stoffmenge der Dicarbonsäure beträgt.

7. Herstellungsverfahren nach Anspruch 1, **dadurch gekennzeichnet, dass** die Veresterungsreaktion in einer inaktiven Atmosphäre durchgeführt wird.

8. Herstellungsverfahren nach Anspruch 7, **dadurch gekennzeichnet, dass** die inaktive Atmosphäre eine Stickstoffatmosphäre ist.

9. Herstellungsverfahren nach Anspruch 1, **dadurch gekennzeichnet, dass** die Veresterungsreaktion bei 190°C bis 220°C durchgeführt wird; und die Veresterungsreaktion über 1 h bis 4 h durchgeführt wird.

10. Herstellungsverfahren nach Anspruch 1, **dadurch gekennzeichnet, dass** die Polykondensationsreaktion bei 220°C bis 250°C durchgeführt wird; und
die Polykondensationsreaktion über 1 h bis 8 h durchgeführt wird.

11. Polyester, hergestellt nach dem Herstellungsverfahren nach den Ansprüchen 1 bis 10.

12. Polyester nach Anspruch 11, **dadurch gekennzeichnet, dass** das Polyester eine Farbwert b von kleiner oder gleich 11,2, eine Grenzviskosität von 0,92 dL/g bis 1,36 dL/g, eine Zugfestigkeit von 62 MPa bis 120 MPa, einen Sauerstoffbarrierekoeffizienten von 0,5 × 10⁻¹³ bis 8,2 × 10⁻¹² und eine Bruchdehnung von 27 % bis 266 % aufweist, wobei die Parameter gemäß der relevanten Methode in der Beschreibung gemessen werden.

## Revendications

1. Procédé de préparation d'un polyester, **caractérisé en ce qu'**il comprend les étapes suivantes :
mettre une matière première comprenant un diacide et un diol en contact avec un catalyseur, et réaliser successivement une réaction d'estérification et une réaction de polycondensation pour obtenir le polyester,
**caractérisé en ce que** le catalyseur est du nano-TiO₂(B).

2. Procédé de préparation selon la revendication 1, **caractérisé en ce que** le diacide est choisi parmi au moins un de l'acide furanedicarboxylique (FDCA) et de l'acide téréphtalique (TPA).

3. Procédé de préparation selon la revendication 1, **caractérisé en ce que** le diol est un diol en C₂₋₄.

4. Procédé de préparation selon la revendication 1, **caractérisé en ce que** le diol est choisi parmi au moins un de l'éthylène glycol (EG), du 1,3-propanediol et du 1,4-butanediol.

5. Procédé de préparation selon la revendication 1, **caractérisé en ce que** le nano-TiO₂(B) est choisi parmi l'un des suivants : un nanomatériau à zéro dimension (0D), un nanomatériau à une dimension (1D), un nanomatériau à deux dimensions (2D) et un nanomatériau à trois dimensions (3D) ;
le nanomatériau 0D est une nanoparticule ;
le nanomatériau 1D est un nanofil ;
le nanomatériau 2D est une nanofeuille ; et
le nanomatériau 3D est une nanosphère poreuse.

6. Procédé de préparation selon la revendication 1, **caractérisé en ce qu'**un rapport molaire du diol sur le diacide est de (1,4-3,0):1 ; et
une quantité molaire du catalyseur est de 0,5 ‰ à 10 ‰ d'une quantité molaire du diacide.

7. Procédé de préparation selon la revendication 1, **caractérisé en ce que** la réaction d'estérification est menée dans une atmosphère inerte.

8. Procédé de préparation selon la revendication 7, **caractérisé en ce que** l'atmosphère inerte est une atmosphère d'azote.

9. Procédé de préparation selon la revendication 1, **caractérisé en ce que** la réaction d'estérification est menée à une température de 190°C à 220°C ; et la réaction d'estérification est menée pendant 1 h à 4 h.

10. Procédé de préparation selon la revendication 1, **caractérisé en ce que** la réaction de polycondensation est menée à une température de 220°C à 250°C ; et
la réaction de polycondensation est menée pendant 1 h à 8 h.

11. Polyester préparé par le procédé de préparation selon les revendications 1 à 10.

12. Polyester selon la revendication 11, **caractérisé en ce que** le polyester présente un chromaticité b inférieure ou égale à 11,2, une viscosité intrinsèque de 0,92 dL/g à 1,36 dL/g, une résistance à la traction de 62 MPa à 120 MPa, un coefficient de barrière à l'oxygène de 0,5 × 10⁻¹³ à 8,2 × 10⁻¹², et un allongement à la rupture de 27 % à 266 %, où les paramètres sont mesurés conformément à la méthode pertinente décrite dans la description.
